(19)

**Europäisches Patentamt**
**European Patent Office**
**Office européen des brevets**

(11) **EP 4 116 383 B1**

(12) **EUROPEAN PATENT SPECIFICATION**

(45) Date of publication and mention
of the grant of the patent:
**19.11.2025   Bulletin 2025/47**

(21) Application number: **22176206.5**

(22) Date of filing: **30.05.2022**

(51) International Patent Classification (IPC):
$C09D\ 11/328^{(2014.01)}$     $C09D\ 11/40^{(2014.01)}$
$C09D\ 11/38^{(2014.01)}$     $C09D\ 11/50^{(2014.01)}$

(52) Cooperative Patent Classification (CPC):
**C09D 11/328; C09D 11/38; C09D 11/40;**
**C09D 11/50**

(54) **ERASABLE INK SET, ERASABLE INK PRINTING APPARATUS, INK SET CONTAINER, PRINTING METHOD, AND PRINTED MATTER**

LÖSCHBARER TINTENSATZ, DRUCKGERÄT MIT LÖSCHBARER TINTE, TINTENSATZBEHÄLTER, DRUCKVERFAHREN UND DRUCKERZEUGNIS

KIT D'ENCRE EFFAÇABLE, APPAREIL D'IMPRESSION À JET D'ENCRE EFFAÇABLE, RÉCIPIENT DE KIT D'ENCRE, PROCÉDÉ D'IMPRESSION ET MATIÈRE IMPRIMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **31.05.2021   JP 2021091386**

(43) Date of publication of application:
**11.01.2023   Bulletin 2023/02**

(73) Proprietor: **BROTHER KOGYO KABUSHIKI KAISHA**
**Nagoya-shi, Aichi 467-8561 (JP)**

(72) Inventors:
• **MAEDA, Mitsunori**
  **Nagoya-shi, 467-8562 (JP)**
• **TSUZAKA, Yuka**
  **Nagoya-shi, 467-8562 (JP)**

(74) Representative: **Prüfer & Partner mbB**
**Patentanwälte · Rechtsanwälte**
**Sohnckestraße 12**
**81479 München (DE)**

(56) References cited:
WO-A1-2011/074750      WO-A1-2013/192268
JP-A- 2005 330 425      JP-A- 2012 131 937
JP-A- H11 140 358       JP-A- S59 124 966
US-A1- 2007 017 413

**Description**

BACKGROUND

An erasable ink using a pH indicator which develops color in an alkaline state, for example, with phenolphthalein or the like, and erases color in a neutral state is known (JP2020-168807 A). Furthermore, document JP S59 124966 A discloses an ink set that includes one or both of a color former and a color former that produces a color by the action of a color former or a color former and produces color, decoloring, and discoloration by mixing them. Inks used for printing, seals, writing utensils, and the like have predetermined colors with pigments, and the colors themselves do not change. Taking color printing as an example, the emphasis is only on how to faithfully reproduce colors on the original plate and how to express subtle intermediate colors, and especially with great efforts to prevent fading and discoloration after printing.

SUMMARY

Such an erasable ink has a problem that the time until the color is erased cannot be controlled.
With the foregoing in mind, it is an object of the present invention to provide an erasable ink set that allows the erasing time of the erasable ink to be controlled.
An erasable ink set includes: an erasable ink; and an erasing time adjuster that adjusts an erasing time of the erasable ink, wherein the erasable ink includes a color developing agent, water, and at least one of a first water-soluble organic solvent or a first surfactant, the color developing agent includes a pH indicator, and the erasing time adjuster includes water and at least one of a second water-soluble organic solvent or a second surfactant.
The erasable ink set allows the erasing time of the erasable ink to be controlled.

BRIEF DESCRIPTION OF THE DRAWINGS

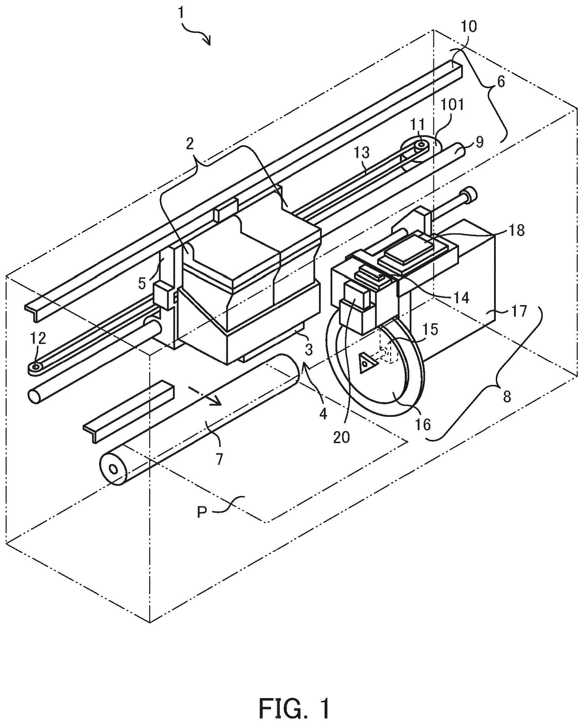

[FIG. 1] FIG. 1 is a schematic perspective view showing a configuration of an example of an ink jet recording apparatus.

DETAILED DESCRIPTION

<Ink set>

The erasable ink set (hereinafter, also referred to as an "ink set") will be described. The ink set includes: an erasable ink; and an erasing time adjuster that adjusts an erasing time of the erasable ink, wherein the erasable ink includes a color developing agent, water, and at least one of a first water-soluble organic solvent or a first surfactant, the color developing agent includes a pH indicator, and the erasing time adjuster includes water and at least one of a second water-soluble organic solvent or a second surfactant.

(Erasable ink)

As described above, the erasable ink includes, a color developing agent, water, and at least one of a first water-soluble organic solvent or a first surfactant, and the color developing agent includes a pH indicator.
The pH indicator is, for example, among reagents which discolor by a change in hydrogen ion concentration (change in pH) in a solution, a reagent which develops color in an alkaline state (for example, pH 9.8 to 13.4), softens the shade of the color as the pH is shifted to a neutral side, and erases (fades) color when the pH is in a neutral state (for example, pH 8.5 or less). A specific example of the pH indicator is at least one selected from the group consisting of phenolphthalein, thymolphthalein, and o-cresolphthalein. For example, one kind of the pH indicators may be used alone or two or more kinds of them may be used in combination. In the erasable ink, the blending amount of the pH indicator is not particularly limited, and is in the range, for example, from 0.1 wt% to 3.0 wt%, preferably from 0.1 wt% to 2.0 wt%, and more preferably from 0.2 wt% to 1.0 wt%.
For example, a conventionally known water-soluble organic solvent may be used as the first water-soluble organic solvent, and for example, among humectants for preventing the ink from drying at a nozzle tip of an ink-jet head and penetrants for adjusting a drying speed on a recording medium, those having a SP value of 12 or less, preferably, those having a SP value of 11 or less may be used. Specific examples of the first water-soluble organic solvent include isopropanol (SP value: 11.5), n-butanol (SP value: 11.3), polyethylene glycol (SP value: 12.0) with a molecular weight of 200, tripropylene glycol (SP value: 11.5), 1,2-hexanediol (SP value: 11.8), propylene glycol monomethyl ether (SP value: 10.2), triethylene glycol-n-butyl ether (SP value: 9.8), tripropylene glycol-n-butyl ether (SP value: 9.2), 2-pyrrolidone (SP value: 11.4), and triethylene glycol monobutyl ether (also referred to as butoxyglycol, butyltriglycol, or BTG, SP value:

10.3). One kind of the first water-soluble organic solvents may be used alone or two or more kinds of them may be used in combination.

In the present embodiment, the SP value (solubility parameter) is, for example, a value obtained by the following equation according to the Fedors method, and the unit of the SP value is $(cal/cm^3)^{1/2}$.

$$SP\ value = (\Sigma\Delta ei/\Sigma\Delta vi)^{1/2}$$

$\Delta ei$: evaporation energy of atoms and atomic groups (cal/mol)
$\Delta vi$: molar volume $(cm^3/mol)$

As the first surfactant, for example, among conventionally known surfactants, those having a SP value of 12 or less, preferably, those having a SP value of 11 or less may be used. As the first surfactant, for example, a commercially available product may be used. As a specific example of the first surfactant, acetylene glycol-based surfactants such as "SURFYNOL® 440" (SP value: 10) produced by Air Products and Chemicals, Inc., "OLFINE® E1010" (SP value: 10.14) produced by Nissin Chemical Industry Co., Ltd., and the like may be used. One kind of the first surfactants may be used alone or two or more kinds of them may be used in combination.

The blending amount of the first water-soluble organic solvent and the first surfactant in the total amount of the erasable ink is, for example, 5.0 wt% or less, preferably 3.0 wt% or less, more preferably 2.0 wt% or less, and still more preferably 0.3 wt% or less. The blending amount of the first water-soluble organic solvent and the first surfactant in the total amount of the erasable ink is preferably 0.05 wt% or more, for example. In the erasable ink, the blending amount of the first water-soluble organic solvent and the first surfactant is, for example, the sum of the blending amount of the first water-soluble organic solvent and the blending amount of the first surfactant.

The content ratio of the first water-soluble organic solvent and the first surfactant in the erasable ink is preferably equal to or less than the content ratio of the second water-soluble organic solvent and the second surfactant in the erasing time adjuster to be described below.

The erasable ink may include, besides the first water-soluble organic solvent, other water-soluble organic solvent, for example. Examples of the other water-soluble organic solvent include humectants for preventing the ink from drying at a nozzle tip of an ink-jet head and penetrants for adjusting a drying speed on a recording medium. The SP value of the other water-soluble organic solvent is not particularly limited, and may be, for example, 12 or less or 12 or more.

The humectant is not particularly limited, and examples thereof include lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols such as diacetone alcohol; ethers such as tetrahydrofuran and dioxane; polyethers such as polyalkylene glycols; polyhydric alcohols such as alkylene glycol, glycerin, trimethylolpropane, and trimethylolethane; 2-pyrrolidone; N-methyl-2-pyrrolidone; and 1,3-dimethyl-2-imidazolidinone. Examples of the polyalkylene glycol include polyethylene glycol and polypropylene glycol. Examples of the alkylene glycol include ethylene glycol, propylene glycol, butylene glycol, diethylene glycol, triethylene glycol, dipropylene glycol, tripropylene glycol, thiodiglycol, and hexylene glycol. One kind of the humectants may be used alone or two or more kinds of them may be used in combination.

The blending amount of the humectant relative to the total amount of the erasable ink is in the range, for example, from 0 wt% to 99.6 wt%, preferably 0 wt% to 80 wt%, more preferably 0 wt% to 50 wt%, or still more preferably 0 wt% to 15 wt%.

The penetrant may be, for example, glycol ether. Examples of the glycol ether include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. One kind of the penetrants may be used alone or two or more kinds of them may be used in combination.

The blending amount of the penetrant relative to the total amount of the water-based ink for ink jet recording is in the range, for example, from 0 wt% to 99.6 wt%, preferably from 0 wt% to 80 wt%, more preferably from 0wt% to 50 wt%, or still more preferably from 0 wt% to 15 wt%.

The erasable ink may include, for example, a pH adjuster. Examples of the pH adjuster include an alkali metal hydroxide, an alkali metal carbonate, a hydroxide of Group II to Group XII element, a carbonate of Group II to Group XII element, and an amine. Specific examples of the pH adjuster include sodium hydrogen carbonate, potassium carbonate, calcium carbonate, sodium hydroxide, sodium carbonate, triethanolamine, N-butyldiethanolamine, sodium citrate (disodium citrate, trisodium citrate), sodium hydrogen carbonate, potassium phosphate (potassium dihydrogen phosphate, dipotassium hydrogen phosphate, tripotassium phosphate), trisodium phosphate, sodium hydrogen phosphate (disodium hydrogen phosphate, sodium dihydrogen phosphate), and sodium dihydrogen pyrophosphate. Among these, sodium hydrogen carbonate, potassium carbonate, calcium carbonate, sodium hydroxide, sodium carbonate, triethanolamine, and N-butyldiethanolamine are preferred. One kind of the pH adjusters may be used alone or two or more kinds of them may be used in combination. In the erasable ink, the blending amount of the pH adjuster may be, for example, an amount in which the pH of the erasable ink is in the range that allows the pH indicator to develop color. The range of pH that allows the pH indicator to develop color is, for example, from pH 9.8 to pH 13.4. The blending amount of the pH adjuster in the total amount of the erasable ink is, for example, 5 wt% or less.

The water is preferably ion-exchanged water or pure water, for example. The blending amount (water ratio) of the water relative to the total amount of the erasable ink is appropriately determined according to desired ink characteristics and the like. The water ratio may be, for example, a balance of the other components. The blending amount of the water is in the range, for example, from 60 w% to 95 wt%, from 65 w% to 85 wt%, or from 70 w% to 85 wt%.

The erasable ink may further contain conventionally known additives as needed. Examples of the additive include a surfactant, a viscosity modifier, a surface tension modifier, and a mildewproofing agent. Examples of the viscosity modifier include polyvinyl alcohol, cellulose, and a water-soluble resin. When the erasable ink contains a surfactant other than the first surfactant as the additive, the SP value of the other surfactant is not particularly limited, and may be, for example, 12 or less or 12 or more.

(Erasing time adjuster)

The erasing time adjuster includes water and at least one of a second water-soluble organic solvent or a second surfactant, as described above.

For example, a conventionally known water-soluble organic solvent may be used as the second water-soluble organic solvent, and for example, among humectants for preventing the ink from drying at a nozzle tip of an ink-jet head and penetrants for adjusting a drying speed on a recording medium, those having a SP value of 12 or less are used, preferably, those having a SP value of 11 or less may be used. Specific examples of the second water-soluble organic solvent include isopropanol (SP value: 11.5), n-butanol (SP value: 11.3), polyethylene glycol (SP value: 12.0) with a molecular weight of 200, tripropylene glycol (SP value: 11.5), 1,2-hexanediol (SP value: 11.8), propylene glycol monomethyl ether (SP value: 10.2), triethylene glycol-n-butyl ether (SP value: 9.8), tripropylene glycol-n-butyl ether (SP value: 9.2), 2-pyrrolidone (SP value: 11.4), and triethylene glycol monobutyl ether (also referred to as butoxyglycol, butyltriglycol, or BTG, SP value: 10.3). One kind of the second water-soluble organic solvents may be used alone or two or more kinds of them may be used in combination.

As the second surfactant, for example, among conventionally known surfactants, those having a SP value of 12 or less are used, preferably, those having a SP value of 11 or less may be used. As the second surfactant, for example, a commercially available product may be used. As a specific example of the second surfactant, an acetylene glycol-based surfactant such as " SURFYNOL® 440" (SP value: 10) produced by Air Products and Chemicals, Inc., "OLFINE® E1010" (SP value: 10.14) produced by Nissin Chemical Industry Co., Ltd., and the like may be used. One kind of the second surfactants may be used alone or two or more kinds of them may be used in combination.

The blending amount of the second water-soluble organic solvent and the second surfactant in the total amount of the erasing time adjuster is, for example, 0.5 wt% or more, preferably 2.0 wt% or more, more preferably 3.0 wt% or more, or still more preferably 5.0 wt% or more. The blending amount of the second water-soluble organic solvent and the second surfactant in the erasing time adjuster is, for example, the sum of the blending amount of the second water-soluble organic solvent and the blending amount of the second surfactant.

The content ratio of the second water-soluble organic solvent and the second surfactant in the erasing time adjuster is equal to or more than the content ratio of the first water-soluble organic solvent and the first surfactant in the erasable ink.

The erasing time adjuster may include, besides the second water-soluble organic solvent, other water-soluble organic solvent, for example. Examples of the other water-soluble organic solvent include humectants for preventing the ink from drying at a nozzle tip of an ink-jet head and penetrants for adjusting a drying speed on a recording medium. The SP value of the other water-soluble organic solvent is not particularly limited, and may be, for example, 12 or less or 12 or more.

The humectant is not particularly limited, and examples thereof include lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols such as diacetone alcohol; ethers such as tetrahydrofuran and dioxane; polyethers such as polyalkylene glycols; polyhydric alcohols such as alkylene glycol, glycerin, trimethylolpropane, and trimethylolethane; 2-pyrrolidone; N-methyl-2-pyrrolidone; and 1,3-dimethyl-2-imidazolidinone. Examples of the polyalkylene glycol include polyethylene glycol and polypropylene glycol. Examples of the alkylene glycol include ethylene glycol, propylene glycol, butylene glycol, diethylene glycol, triethylene glycol, dipropylene glycol, tripropylene glycol, thiodiglycol, and hexylene glycol. One kind of the humectants may be used alone or two or more kinds of them may be used in combination.

The blending amount of the humectant relative to the total amount of the erasing time adjuster is in the range, for example, from 0 wt% to 99.5 wt%, preferably from 0 wt% to 90 wt%, more preferably from 0 wt% to 50 wt%, or still more preferably from 0 wt% to 20 wt%.

The penetrant may be, for example, glycol ether. Examples of the glycol ether include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. One kind of the penetrants may be used alone or two or more kinds of them may be used in combination.

The blending amount of the penetrant relative to the total amount of the erasing time adjuster is in the range, for example, from 0 wt% to 99.5 wt%, preferably from 0 wt% to 90 wt%, more preferably from 0 wt% to 50 wt%, or still more preferably from 0 wt% to 20 wt%.

The water is preferably ion-exchanged water or pure water. The blending amount (water ratio) of the water relative to the total amount of the erasing time adjuster is appropriately determined according to desired characteristics and the like. The water ratio may be, for example, a balance of the other components. The blending amount of the water is in the range, for example, from 60% to 90wt%, from 65% to 85wt%, or from 70% to 85wt%.

The erasing time adjuster may further contain conventionally known additives as needed. Examples of the additive include a pH adjuster, a surfactant, a viscosity modifier, a surface tension modifier, and a mildewproofing agent. Examples of the viscosity modifier include polyvinyl alcohol, cellulose, and a water-soluble resin. When the erasing time adjuster contains a surfactant other than the second surfactant as the additive, the SP value of the other surfactant is not particularly limited, and may be, for example, 12 or less or 12 or more.

The erasable ink set including the erasable ink and the erasing time adjuster may be used, for example, but not limited to, for ink-jet recording. The erasable ink set may also be used in applications such as, for example, writing instruments such as pens, markers, and brushes; and coating materials.

<Ink set container>

Next, an ink set contains includes an ink set, wherein the ink set is the erasable ink set. Examples of the ink set container include an ink cartridge, a tank, and a pouch. As the main body of the ink set container, for example, a conventionally known container may be used.

<Erasable ink printing apparatus>

Next, an erasable ink printing apparatus (hereinafter also referred to as a "printing apparatus") will be described.

The erasable ink printing apparatus includes: a first flow path; a first application unit; a second flow path; and a second application unit, wherein the first flow path is supplied with the erasable ink of the erasable ink set, the second flow path is supplied with the erasing time adjuster of the erasable ink set, the first application unit communicates with the first flow path, the second application unit communicates with the second flow path, the first application unit applies the erasable ink to a recording medium, and the second application unit applies the erasing time adjuster to the recording medium.

Examples of the recording medium include paper such as recording paper; and fabrics such as knitted fabrics and woven fabrics. The material of the fabric may be, for example, natural fibers or synthetic fibers. Examples of the natural fiber include cotton and silk. Examples of the synthetic fiber include urethane, acrylic, polyester, and nylon.

The printing apparatus may further include, for example, a control unit that controls an application amount of the erasing time adjuster applied to the recording medium by the second application unit. The control unit controls the second application unit to increase the application amount of the erasing time adjuster to be more than a predetermined amount when shortening an erasing time of the erasable ink to be shorter than a predetermined time and to reduce the application amount of the erasing time adjuster to be less than a predetermined amount when extending the erasing time of the erasable ink to be longer than the predetermined time, thereby controlling the application amount of the erasing time adjuster.

The control unit may, for example, control the order of the application of the erasable ink to the recording medium by the first application unit and the application of the erasing time adjuster to the recording medium by the second application unit, and may apply the erasable ink after the application of the erasing time adjuster.

FIG. 1 shows a configuration of an example of the printing apparatus. As shown in FIG. 1, the printing apparatus 1 includes an ink cartridge 2 including a first ink cartridge and a second ink cartridge, an ink ejection unit (ink jet head) 3 including a first application unit and a second application unit, a head unit 4, a carriage 5, a drive unit 6, a platen roller 7, and a purge device 8 as main components. Although it is not shown in FIG. 1, the first ink cartridge of the ink cartridge 2 and the first application unit of the ink ejection unit 3 are connected by a first flow path, the erasable ink is supplied from the first ink cartridge containing the erasable ink to the first flow path, and the first application unit ejects the erasable ink on a recording medium. Further, the second ink cartridge of the ink cartridge 2 and the second application unit of the ink ejection unit 3 are connected by a second flow path, the erasing time adjuster is supplied from the second ink cartridge containing the erasing time adjuster to the second flow path, and the second application unit ejects the erasing time adjuster on the recording medium.

As described above, the ink cartridge 2 includes the first ink cartridge containing the erasable ink and the second ink cartridge containing the erasing time adjuster, for example. As the main body of the ink cartridge, for example, a conventionally known body may be used.

Also, although it is not shown in FIG. 1, the printing apparatus 1 may include, in addition to the ink cartridge 2, a set of four ink cartridges each containing each of four water-based color inks, yellow, magenta, cyan, and black. In addition, in place of the set of four ink cartridges, an integrated ink cartridge in which the inside thereof is partitioned so as to form a water-based yellow ink storage portion, a water-based magenta ink storage portion, a water-based cyan ink storage portion, and a water-based black ink storage portion may be used.

The inkjet head 3 installed in the head unit 4 performs recording on a recording medium (for example., recording paper) P. The ink cartridge 2 and the head unit 4 are mounted on the carriage 5. The drive unit 6 reciprocates the carriage 5 in the linear direction. As the drive unit 6, for example, a conventionally known drive unit may be used (see, for example, JP 2008-246821A). The platen roller 7 extends in the reciprocating direction of the carriage 5 and is disposed to face the ink jet head 3.

The purge device 8 sucks defective ink containing bubbles and the like pooled inside the inkjet head 3. As the purge device 8, for example, a conventionally known purge device may be used (see, for example, JP 2008-246821A).

On the platen roller 7 side of the purge device 8, a wiper member 20 is disposed adjacent to the purge device 8. The wiper member 20 is formed in a spatula shape and is configured to wipe the nozzle forming surface of the ink jet head 3 in accordance with the movement of the carriage 5. In FIG. 1, the cap 18 is configured to cover a plurality of nozzles of the inkjet head 3 which are configured to return to the reset position when the recording is completed, in order to prevent the ink from drying.

In the printing apparatus 1 of the present embodiment, the ink cartridge 2 is mounted on one carriage 5 together with the head unit 4. However, the printing apparatus 1 is not limited thereto. In the printing apparatus 1, the ink cartridge 2 may be mounted on a carriage which is different from the one on which the head unit 4 is mounted. The ink cartridge 2 may be disposed and fixed in the printing apparatus 1 without being mounted on the carriage 5. In these embodiments, for example, the ink cartridge 2 and the head unit 4 mounted on the carriage 5 are connected by the flow path such as a tube, and the erasable ink and the erasing time adjuster are supplied from the ink cartridge 2 to the head unit 4. In these embodiments, a bottle-shaped ink bottle may be used instead of the ink cartridge 2. In this case, an inlet through which an ink is injected from the outside into the inside is preferably provided in the ink bottle, for example.

Ink jet recording using the printing apparatus 1 is performed, for example, as follows. First, the recording paper P is fed from a paper feed cassette (not shown) provided on the side or below the printing apparatus 1. The recording paper P is introduced between the inkjet head 3 and the platen roller 7. On the introduced recording paper P, a predetermined recording is performed by the erasing time adjuster ejected from the second application unit of the inkjet head 3 and the erasable ink ejected from the first application unit of the ink jet head 3. The recording sheet P after recording is ejected from the printing apparatus 1. In FIG. 1, a sheet feeding mechanism and a sheet ejecting mechanism of the recording sheet P are not shown.

Although the apparatus shown in FIG. 1 employs a serial ink jet head, the apparatus is not limited thereto. The printing apparatus may be an apparatus that employs a line ink jet head or the printing apparatus may be a roll-to-roll printing apparatus.

In the apparatus shown in FIG. 1, the ink-jet head 3 that ejects the erasable ink and the erasing time adjuster by an ink-jet method is employed as the first application unit and the second application. It is to be noted, however, that the apparatus is not limited to this illustrative example. The first application unit and the second application unit may perform application of the erasable ink and the erasing time adjuster by a conventionally known application method such as spraying, stamping, brushing, roller coating, dipping, or the like, for example.

<Printing method>

A printing method is a printing method using an erasable ink set, wherein the erasable ink set is the above-describe erasable ink set, and the erasable ink and the erasing time adjuster are applied to a recording medium. The printing method may be carried out, for example, using the erasable ink printing apparatus. The application includes character-printing, image-printing, printing, and the like.

In the printing method, for example, the application amount of the erasing time adjuster is increased to be more than a predetermined amount when shortening the erasing time of the erasable ink applied to the recording medium to be shorter than a predetermined time. In addition, the application amount of the erasing time adjuster is reduced to be less than a predetermined amount when extending the erasing time of the erasable ink applied to the recording medium to be longer than the predetermined time.

In the printing method, the order of the application of the erasable ink and the erasing time adjuster is not particularly limited, and for example, they may be applied simultaneously or may be applied in any order, and preferably the erasable ink may be applied after the application of the erasing time adjuster.

<Printed matter production method>

The method for producing a printed matter is characterized in that it includes printing, wherein the printing is performed by the above-described printing method, and other steps and conditions are not particularly limited. According to the method for producing a printed matter, for example, the erasing time of the erasable ink in a printed matter may be controlled. Examples

Eexamples are described below. The present invention, however, is not limited by the following examples.

(Preparation of erasable ink)

Components of the erasable ink composition summarized in Table 1 were uniformly mixed to obtain erasable inks 1 to 6 (inks 1 to 6) of Examples 1 to 6. In Table 1 below, the numbers in parentheses indicate the SP values of components.

Table 1

| | | | Ex. 1 | Ex. 2 | Ex. 3 | Ex. 4 | Ex. 5 | Ex. 6 |
|---|---|---|---|---|---|---|---|---|
| | | | Ink 1 | Ink 2 | Ink 3 | Ink 4 | Ink 5 | Ink 6 |
| Ink composition | pH indicator | Thymolphthalein | 1 | 1 | 1 | | | 1 |
| | | Phenolphthalein | | | | 1 | | |
| | | o-cresolphthalein | | | | | 1 | |
| | Humectant | Triethylene glycol (SP value: 13.6) | 15.0 | 15.0 | 15.0 | 15.0 | 15.0 | 15.0 |
| | First water-soluble organic solvent | Triethylene glycol monobutyl ether (SP value: 10.3) | | 1.5 | 2.5 | | | 4.5 |
| | First surfactant | SURFYNOL® 440 (SP value: 10) | 0.3 | 0.3 | 0.3 | 0.3 | 0.3 | 0.3 |
| | pH adjuster | Sodium hydroxide | 4.8 | 4.8 | 4.8 | 4.8 | 4.8 | 4.8 |
| | Solvent | Water | Balance | Balance | Balance | Balance | Balance | Balance |

(Preparation of erasing time adjuster)

Components of the erasing time adjuster composition summarized in Table 2 were uniformly mixed to obtain the erasing time adjuster of Example. In Table 2 below, the numbers in parentheses indicate the SP values of components.

Table 2

| Erasing time adjuster composition | | | | |
|---|---|---|---|---|
| | Humectant | | Glycerin (SP value: 20) | 10.0 |
| | | | Triethylene glycol (SP value: 13.6) | 10.0 |
| | Second water-soluble organic solvent | | Triethylene glycol monobutyl ether (SP value: 10.3) | 5.0 |
| | Second surfactant | | SURFYNOL® 440 (SP value: 10) | 0.5 |
| | Solvent | | Water | Balance |

The erasable inks 1 to 6 were applied to recording paper (trade name: ASKUL Super White +, ASKUL Corporation) so as to achieve the application amount per unit area of 0.9 mg/cm$^2$ (without the erasing time adjuster). The erasing time adjuster was applied to recording paper (trade name: ASKUL Super White +, ASKUL Corporation) so as to achieve the application amount per unit area of 0.9 mg/cm$^2$, and then the erasable inks 1 to 6 were applied to the recording paper (trade name: ASKUL Super White +, ASKUL Corporation) to which the erasing time adjuster has been applied, so as to achieve the application amount per unit area of 0.6 mg/cm$^2$ (with the erasing time adjuster). Then, the erasing time of the erasable inks 1 to 6 in each of the case where the erasing time adjuster was not applied and the case where the erasing time adjuster was applied was measured.

The erasing time was measured after the application of the erasable ink until the OD value (optical density) became 0. The OD value (optical density) was measured by a spectrocolorimeter SpectroEye® (light source: D50, viewing angle: 2°, ANSI-T) produced by X-Rite.

The results are summarized in Table 3 below. As summarized in Table 3, the erasing time of all of the erasable inks 1 to 6 could be controlled by applying the erasing time adjuster. In particular, the erasing time of the erasable inks 1, 4, and 5 could be adjusted greatly from those with a maximum erasing time longer than 7 d (< 7 d) to those with a minimum erasing time less than 3 h (3 h <) by applying or not applying the erasing time adjuster.

Table 3

| | Erasing time | |
|---|---|---|
| | Without erasing time adjuster | With erasing time adjuster |
| Erasable ink 1 (comparative example) | < 7 d | 3 h < |
| Erasable ink 2 | 5d | 3 h < |
| Erasable ink 3 | 2 d | 3 h < |
| Erasable ink 4 (comparative example) | < 7 d | 3 h < |
| Erasable ink 5 (comparative example) | < 7 d | 3 h < |
| Erasable ink 6 (comparative example) | 6 h | 3 h < |

**Claims**

1. An erasable ink set, comprising:

    an erasable ink; and

    an erasing time adjuster that adjusts an erasing time of the erasable ink, wherein
    the erasable ink comprises a color developing agent, water, and at least one of a first water-soluble organic solvent or a first surfactant,
    the color developing agent comprises a pH indicator, and

the erasing time adjuster comprises water and at least one of a second water-soluble organic solvent or a second surfactant, wherein

a SP value of the first water-soluble organic solvent and the first surfactant is 12 or less,
a SP value of the second water-soluble organic solvent and the second surfactant is 12 or less, and
a content ratio of the first water-soluble organic solvent and the first surfactant in the erasable ink is equal to or less than a content ratio of the second water-soluble organic solvent and the second surfactant in the erasing time adjuster.

2. The erasable ink set according to claim 1, wherein

the blending amount of the first water-soluble organic solvent and the first surfactant in the erasable ink is 5.0 wt% or less,
the blending amount of the second water-soluble organic solvent and the second surfactant in the erasing time adjuster is 0.5 wt% or more.

3. The erasable ink set according to claim 2, wherein
the blending amount of the first water-soluble organic solvent and the first surfactant in the erasable ink is 3.0 wt% or less.

4. The erasable ink set according to claim 2, wherein
the blending amount of the first water-soluble organic solvent and the first surfactant in the erasable ink is 2.0 wt% or less.

5. The erasable ink set according to claim 2, wherein
the blending amount of the first water-soluble organic solvent and the first surfactant in the erasable ink is 0.3 wt% or less.

6. The erasable ink set according to any one of claims 1 to 5, wherein

a SP value of the first water-soluble organic solvent and the first surfactant is 11 or less, and
a SP value of the second water-soluble organic solvent and the second surfactant is 11 or less.

7. The erasable ink set according to any one of claims 1 to 6, wherein
the pH indicator includes at least one selected from the group consisting of phenolphthalein, thymolphthalein, and o-cresolphthalein.

8. An erasable ink printing apparatus, comprising:

a first flow path;
a first application unit;
a second flow path; and
a second application unit, wherein
the first flow path is supplied with the erasable ink of the erasable ink set according to any one of claims 1 to 7,
the second flow path is supplied with the erasing time adjuster of the erasable ink set according to any one of claims 1 to 7,
the first application unit communicates with the first flow path,
the second application unit communicates with the second flow path,
the first application unit applies the erasable ink to a recording medium, and
the second application unit applies the erasing time adjuster to the recording medium.

9. The erasable ink printing apparatus according to claim 8, further comprising:

a control unit, wherein
the control unit controls an application amount of the erasing time adjuster applied to the recording medium by the second application unit,
the application amount is increased to be more than a predetermined amount when shortening an erasing time to be shorter than a predetermined time, and the application amount is reduced to be less than the predetermined amount when extending the erasing time to be longer than the predetermined time.

10. The erasable ink printing apparatus according to claim 8, further comprising:

a control unit, wherein
the control unit controls an order of an application of the erasable ink to the recording medium by the first application unit and an application of the erasing time adjuster to the recording medium by the second application unit, and
the erasable ink is applied after the application of the erasing time adjuster.

11. A printing method, comprising:
applying the erasable ink of the erasable ink set according to any one of claims 1 to 7 and the erasing time adjuster of the erasable ink set according to any one of claims 1 to 7 to a recording medium.

12. The printing method according to claim 11, wherein
the application amount of the erasing time adjuster is increased to be more than a predetermined amount when shortening an erasing time of the erasable ink applied to the recording medium to be shorter than a predetermined time.

13. The printing method according to claim 11, wherein
the application amount of the erasing time adjuster is reduced to be less than a predetermined amount when extending an erasing time of the erasable ink applied to the recording medium to be longer than a predetermined time.

14. The printing method according to any one of claims 11 to 13, wherein
the erasable ink is applied after the application of the erasing time adjuster.


## Patentansprüche

1. Löschbarer Tintensatz, umfassend:

eine löschbare Tinte; und

einen Löschzeit-Einsteller, der eine Löschzeit der löschbaren Tinte einstellt, wobei die löschbare Tinte ein Farbentwicklungsmittel, Wasser und mindestens eines von einem ersten wasserlöslichen organischen Lösungsmittel oder einem ersten Tensid umfasst,
das Farbentwicklungsmittel einen pH-Indikator umfasst, und

der Löschzeit-Einsteller Wasser und mindestens eines von einem zweiten wasserlöslichen organischen Lösungsmittel oder einem zweiten Tensid umfasst, wobei

ein SP-Wert des ersten wasserlöslichen organischen Lösungsmittels und des ersten Tensids 12 oder weniger beträgt,
ein SP-Wert des zweiten wasserlöslichen organischen Lösungsmittels und des zweiten Tensids 12 oder weniger beträgt, und
ein Gehaltsverhältnis des ersten wasserlöslichen organischen Lösungsmittels und des ersten Tensids in der löschbaren Tinte gleich oder kleiner als ein Gehaltsverhältnis des zweiten wasserlöslichen organischen Lösungsmittels und des zweiten Tensids in dem Löschzeit-Einsteller ist.

2. Löschbarer Tintensatz gemäß Anspruch 1, wobei

die Mischungsmenge des ersten wasserlöslichen organischen Lösungsmittels und des ersten Tensids in der löschbaren Tinte 5,0 Gew.-% oder weniger beträgt,
die Mischungsmenge des zweiten wasserlöslichen organischen Lösungsmittels und des zweiten Tensids in dem Löschzeit-Einsteller 0,5 Gew.-% oder mehr beträgt.

3. Löschbarer Tintensatz gemäß Anspruch 2, wobei
die Mischungsmenge des ersten wasserlöslichen organischen Lösungsmittels und des ersten Tensids in der löschbaren Tinte 3,0 Gew.-% oder weniger beträgt.

4. Löschbarer Tintensatz gemäß Anspruch 2, wobei
die Mischungsmenge des ersten wasserlöslichen organischen Lösungsmittels und des ersten Tensids in der löschbaren Tinte 2,0 Gew.-% oder weniger beträgt.

5. Löschbarer Tintensatz gemäß Anspruch 2, wobei
die Mischungsmenge des ersten wasserlöslichen organischen Lösungsmittels und des ersten Tensids in der löschbaren Tinte 0,3 Gew.-% oder weniger beträgt.

6. Löschbarer Tintensatz gemäß einem der Ansprüche 1 bis 5, wobei

ein SP-Wert des ersten wasserlöslichen organischen Lösungsmittels und des ersten Tensids 11 oder weniger beträgt, und
ein SP-Wert des zweiten wasserlöslichen organischen Lösungsmittels und des zweiten Tensids 11 oder weniger beträgt.

7. Löschbarer Tintensatz gemäß einem der Ansprüche 1 bis 6, wobei
der pH-Indikator mindestens eines, ausgewählt aus der Gruppe, bestehend aus Phenolphthalein, Thymolphthalein und o-Kresolphthalein, umfasst.

8. Druckvorrichtung für löschbare Tinte, umfassend:

einen ersten Strömungsweg;
eine erste Auftragungseinheit;
einen zweiten Strömungsweg; und
eine zweite Auftragungseinheit, wobei
der erste Strömungsweg mit der löschbaren Tinte des löschbaren Tintensatzes gemäß einem der Ansprüche 1 bis 7 versorgt wird,
der zweite Strömungsweg mit dem Löschzeit-Einsteller des löschbaren Tintensatzes gemäß einem der Ansprüche 1 bis 7 versorgt wird,
die erste Auftragungseinheit mit dem ersten Strömungsweg kommuniziert,
die zweite Auftragungseinheit mit dem zweiten Strömungsweg kommuniziert,
die erste Auftragungseinheit die löschbare Tinte auf ein Aufzeichnungsmedium aufträgt, und
die zweite Auftragungseinheit den Löschzeit-Einsteller auf das Aufzeichnungsmedium aufträgt.

9. Druckvorrichtung für löschbare Tinte gemäß Anspruch 8, ferner umfassend:

eine Steuereinheit, wobei
die Steuereinheit eine Auftragungsmenge des durch die zweite Auftragungseinheit auf das Aufzeichnungsmedium aufgetragenen Löschzeit-Einstellers steuert,
die Auftragungsmenge erhöht wird, um mehr als eine vorbestimmte Menge zu sein, wenn eine Löschzeit verkürzt wird, um kürzer als eine vorbestimmte Zeit zu sein, und die Auftragungsmenge verringert wird, um weniger als die vorbestimmte Menge zu sein, wenn die Löschzeit verlängert wird, um länger als die vorbestimmte Zeit zu sein.

10. Druckvorrichtung für löschbare Tinte gemäß Anspruch 8, ferner umfassend:

eine Steuereinheit, wobei
die Steuereinheit eine Reihenfolge eines Auftragens der löschbaren Tinte auf das Aufzeichnungsmedium durch die erste Auftragungseinheit und eines Auftragens des Löschzeit-Einstellers auf das Aufzeichnungsmedium durch die zweite Auftragungseinheit steuert, und
die löschbare Tinte nach dem Auftragen des Löschzeit-Einstellers aufgetragen wird.

11. Druckverfahren, umfassend:
Auftragen der löschbaren Tinte des löschbaren Tintensatzes gemäß einem der Ansprüche 1 bis 7 und des Löschzeit-Einstellers des löschbaren Tintensatzes gemäß einem der Ansprüche 1 bis 7 auf ein Aufzeichnungsmedium.

12. Druckverfahren gemäß Anspruch 11, wobei

die Auftragungsmenge des Löschzeit-Einstellers erhöht wird, um mehr als eine vorbestimmte Menge zu sein, wenn eine Löschzeit der auf das Aufzeichnungsmedium aufgetragenen löschbaren Tinte verkürzt wird, um kürzer als eine vorbestimmte Zeit zu sein.

13. Druckverfahren gemäß Anspruch 11, wobei
die Auftragungsmenge des Löschzeit-Einstellers verringert wird, um weniger als eine vorbestimmte Menge zu sein, wenn eine Löschzeit der auf das Aufzeichnungsmedium aufgetragenen löschbaren Tinte verlängert wird, um länger als eine vorbestimmte Zeit zu sein.

14. Druckverfahren gemäß einem der Ansprüche 11 bis 13, wobei
die löschbare Tinte nach dem Auftragen des Löschzeit-Einstellers aufgetragen wird.


**Revendications**

1. Kit d'encre effaçable, comprenant :

   une encre effaçable ; et

   un ajusteur de temps d'effacement qui ajuste un temps d'effacement de l'encre effaçable, où
   l'encre effaçable comprend un agent de développement de couleur, de l'eau, et au moins l'un d'un premier solvant organique soluble dans l'eau ou d'un premier tensioactif,
   l'agent de développement de couleur comprend un indicateur de pH, et

   l'ajusteur de temps d'effacement comprend de l'eau et au moins l'un d'un second solvant organique soluble dans l'eau ou d'un second tensioactif, où

   une valeur SP du premier solvant organique soluble dans l'eau et du premier tensioactif est de 12 ou moins,
   une valeur SP du second solvant organique soluble dans l'eau et du second tensioactif est de 12 ou moins, et
   un rapport de teneur du premier solvant organique soluble dans l'eau et du premier tensioactif dans l'encre effaçable est égal ou inférieur à un rapport de teneur du second solvant organique soluble dans l'eau et du second tensioactif dans l'ajusteur de temps d'effacement.

2. Kit d'encre effaçable selon la revendication 1, où

   la quantité de mélange du premier solvant organique soluble dans l'eau et du premier tensioactif dans l'encre effaçable est de 5,0 % en poids ou moins,
   la quantité de mélange du second solvant organique soluble dans l'eau et du second tensioactif dans l'ajusteur de temps d'effacement est de 0,5 % en poids ou plus.

3. Kit d'encre effaçable selon la revendication 2, où
   la quantité de mélange du premier solvant organique soluble dans l'eau et du premier tensioactif dans l'encre effaçable est de 3,0 % en poids ou moins.

4. Kit d'encre effaçable selon la revendication 2, où
   la quantité de mélange du premier solvant organique soluble dans l'eau et du premier tensioactif dans l'encre effaçable est de 2,0 % en poids ou moins.

5. Kit d'encre effaçable selon la revendication 2, où
   la quantité de mélange du premier solvant organique soluble dans l'eau et du premier tensioactif dans l'encre effaçable est de 0,3 % en poids ou moins.

6. Kit d'encre effaçable selon l'une quelconque des revendications 1 à 5, où

   une valeur SP du premier solvant organique soluble dans l'eau et du premier tensioactif est de 11 ou moins, et
   une valeur SP du second solvant organique soluble dans l'eau et du second tensioactif est de 11 ou moins.

7. Kit d'encre effaçable selon l'une quelconque des revendications 1 à 6, où

l'indicateur de pH comprend au moins un élément choisi dans le groupe constitué par la phénolphtaléine, la thymolphtaléine, et l'o-crésolphtaléine.

8.  Appareil d'impression à jet d'encre effaçable, comprenant :

    un premier trajet d'écoulement ;
    une première unité d'application ;
    un second trajet d'écoulement; et
    une seconde unité d'application, où
    le premier trajet d'écoulement est alimenté avec l'encre effaçable du kit d'encre effaçable selon l'une quelconque des revendications 1 à 7,
    le second trajet d'écoulement est alimenté avec l'ajusteur de temps d'effacement du kit d'encre effaçable selon l'une quelconque des revendications 1 à 7,
    la première unité d'application communique avec le premier trajet d'écoulement,
    la seconde unité d'application communique avec le second trajet d'écoulement,
    la première unité d'application applique l'encre effaçable sur un support d'enregistrement, et
    la seconde unité d'application applique l'ajusteur de temps d'effacement sur le support d'enregistrement.

9.  Appareil d'impression à jet d'encre effaçable selon la revendication 8, comprenant en outre :

    une unité de commande, où
    l'unité de commande commande une quantité d'application de l'ajusteur de temps d'effacement appliquée sur le support d'enregistrement par la seconde unité d'application,
    la quantité d'application est augmentée pour être supérieure à une quantité prédéterminée lors du raccourcissement d'un temps d'effacement pour être plus court qu'un temps prédéterminé, et la quantité d'application est réduite pour être inférieure à la quantité prédéterminée lors de l'extension du temps d'effacement pour être plus long que le temps prédéterminé.

10. Appareil d'impression à jet d'encre effaçable selon la revendication 8, comprenant en outre :

    une unité de commande, où
    l'unité de commande commande un ordre d'une application de l'encre effaçable sur le support d'enregistrement par la première unité d'application et d'une application de l'ajusteur de temps d'effacement sur le support d'enregistrement par la seconde unité d'application, et
    l'encre effaçable est appliquée après l'application de l'ajusteur de temps d'effacement.

11. Procédé d'impression, comprenant :
    l'application de l'encre effaçable du kit d'encre effaçable selon l'une quelconque des revendications 1 à 7 et de l'ajusteur de temps d'effacement du kit d'encre effaçable selon l'une quelconque des revendications 1 à 7 sur un support d'enregistrement.

12. Procédé d'impression selon la revendication 11, où
    la quantité d'application de l'ajusteur de temps d'effacement est augmentée pour être supérieure à une quantité prédéterminée lors du raccourcissement d'un temps d'effacement de l'encre effaçable appliquée sur le support d'enregistrement pour être plus court qu'un temps prédéterminé.

13. Procédé d'impression selon la revendication 11, où
    la quantité d'application de l'ajusteur de temps d'effacement est réduite pour être inférieure à une quantité prédéterminée lors de l'extension d'un temps d'effacement de l'encre effaçable appliquée sur le support d'enregistrement pour être plus long qu'un temps prédéterminé.

14. Procédé d'impression selon l'une quelconque des revendications 11 à 13, où
    l'encre effaçable est appliquée après l'application de l'ajusteur de temps d'effacement.

FIG. 1

**EP 4 116 383 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020168807 A
- JP S59124966 A

- JP 2008246821 A